# EUROPEAN PATENT SPECIFICATION

(11) **EP 1 308 098 B1**
(45) Date of publication and mention of the grant of the patent: **11.02.2004**
(21) Application number: 01500261.1
(22) Date of filing: 05.11.2001
(51) Int. Cl.: A23L 1/325

(54) **Baby eel substitute food product and method of fabrication thereof**
Baby-Aal Ersatzprodukt und Verfahren zu dessen Herstellung
Procédé de préparation d'un produit de remplacement de civelle et produit ainsi obtenu

(43) Date of publication of application: 07.05.2003
(73) Proprietor: Angulas Y Mariscos Maemino Estevez Y Gonzalez S.L., 36470 Salceda de Caselas (Pontevedra) (ES)
(72) Inventor: Alava Marquinez, Jose Inaki, 36470 Salceda de Caselas (Pontevedra) (ES)
(74) Representative: Esteban Perez-Serrano, Maria Isabel

(56) References cited:
- EP-A- 1 149 538
- ES-A- 2 125 196
- DATABASE WPI Section Ch, Week 199434 Derwent Publications Ltd., London, GB; Class D12, AN 1994-273303 XP002046460 & ES 2 055 668 A (PASTOR MARIN J), 16 August 1994 (1994-08-16)

## Description

### OBJECT OF THE INVENTION

The invention herein disclosed relates to a baby eel substitute and a method of fabrication thereof, from among the jellified food products based on fish derivatives known as "surimi" and their industrial fabrication methods.

The invention is characterized by a special formulation of the substitute that incorporates new additives which determine the gelling and texture of the final product, as well as its organoleptic characteristics and external appearance, its nutritional properties and its resistance to the freezing process. Also characteristic is the improved fabrication method, which incorporates a new stage prior to adding the water, as well as sanitary and technological improvements.

### BACKGROUND OF THE INVENTION

The great development of the field of food technology in the fish and seafood substitute sector is due to the good reception of the first products of this type by the market, and in this specific case of the most basic baby eel substitute (ES 2010637).

Since then the diversity of food products to be imitated has increased, such as the black back eel (ES 2034920, ES 2048627, ES 2125196), crab meat (ES 2017443), prawn meat (US 4666720), lobster meat (US 4652455), molluscs (US 4692341) or even others intentionally unlike any animal model (9801516). However, this diversification has not been accompanied by an improvement in the procedures and ingredients employed in their fabrication.

All baby eel substitutes have in common a major base of diced fish meat or surimi, to which are added several ingredients in varying proportions. Some of these ingredients are present in all cases, such as gelling agents (agar-agar, alginates, carrageen or collagens) or products which increase the gelling capacity, such as starch (fecula or vegetable flours of various origins), egg albumin or even blood plasma. Other ingredients present in all formulae are salt (sodium or potassium chloride), water and additives to increase the elasticity of the product, (ovoalbumin, starch, surfactant agents, calcium and magnesium salts or vegetable proteins).

However, other additives, particularly those responsible for the optical and organoleptic properties of the finished product, are much more specific, such as added proteins, flavor additives, aroma or coloring, although others such as vegetable or animal oils are used in most of the previous inventions. Other specific ingredients are cryoprotection agents, as a typical form of preserving the finished product is to freeze it, although these are not present in all the preceding inventions. These specific additives can be present in varying proportions in the final product depending on the part of the product in which they are included. Thus, in the patents imitating the black back eel (ES 2034920, ES 2048627, ES 2125196) there is always a colored part which is darker, sometimes even with a different texture (ES 2049654).

The specific properties of each eel substitute patent are therefore mainly characterized by the specific ingredients of each one and by the specific proportions of the basic ingredients, which in many cases, such as this one, are beyond the provisions of preceding inventions.

As regards the fabrication processes these can be considered as based on a model on which slight variations are made in each specific patent. This technique is the one employed traditionally to manufacture the Japanese product known as "kamaboko" (a type of fish paste pie) to which a number of additives and treatments are added to obtain its gelling. This basic model has six clearly differentiated stages, described hereunder.

Firstly, there is always a stage which involves grinding the fish which is to serve as a base for the product, which stage is occasionally described in detail, such as in vacuum and insulated containers (ES 2125196), but which is generally not specifically described. Secondly, there is a stage of homogenization of the mass of ground fish, which is also not described in detail, with a few exceptions such as for a combined grinding, cutting, kneading and mixing process for the mass (ES 2049654). Thirdly, there is the addition of the aforementioned complementary ingredients. In fourth place there is a second homogenization for the correct distribution of the additives in the initial fish mass. In fifth place there is a thermal treatment which is often simple (ES 2048672, ES 2055668) but which may also consists of two steps (ES 2010637) or be followed by a cold blast (ES 2125196). The texture will depend not only on the ingredients but also on these heat treatments. In sixth place, there is an extrusion and cutting stage of the product meant to give it its final external appearance, for which some extrusions are cylindrical with endless cutting (ES 2034920) while other are laminar to allow transverse elements like simulating eyes or molded ends, in which the cut is sequential (ES 2048672, ES 2055668, ES 2125196).

The order of the above stages is rarely changed, except when performing the thermal treatment between the extrusion and the cutting (ES2048672). Aside from this basic model there are few examples of additional steps in the fabrication procedure, one of which is a step to allow the product to rest a while before it is extruded (9801516). Otherwise, there are only changes in iteration, where the third and fourth stages are repeated to differentiate ingredients such as salt and the other additives (ES 2010637).

EP 1 149 538 discloses a baby eel substitute and method of fabrication thereof.

However, the final product and the fabrication method can still be improved in many aspects, wherein lies the purpose of the present invention.

The invention specifically intends to improve the parameters of elasticity, consistency or gelling capacity and aqueousness of the texture, as well as the stability of the product to the freezing process, its wetting capacity, and introduces a novel pH control system for the product which affects directly its organoleptic properties.

The fabrication process is also expanded by an additional stage in which the water added in the third stage is treated to improve the solubility of the other products and the taste of the final product, while solving the problem of calcification deposits in the machinery with the resulting reduction in indirect costs. The only known antecedent in which the water is treated previously is an invention (US 4806378) in which its calcium content is enriched with water-soluble or magnesium salts to improve the washing process of the surimi incorporated in said invention. However, this process can be said to be completely opposite to the one provided in this invention as well as having a completely different object.

Additionally, during the manufacture of meat products (ES 2102974) the points considered as critical are those which require water addition, whether in the kneading stage or when washing to add the alginate. In these the water must not incorporate a soluble calcium salt, whether by decalcifying it or by adding sequestering agents or encapsulated calcium salts, thereby preventing the risk of a premature gelling of the alginate. This patent does not consider any dechlorination treatment in addition to this specific intention to prevent gelling, which is different in the invention presented herein.

As regards the prior dechlorination of the water, certain organic chlorides such as trihalomethanes (particularly of Cl, but also of Br) contained in the water have recently been the object of epidemiological studies due to their supposed mutagenic and carcinogenic properties, for which reason this operation, which has never before been described in patents for this type of food manufacturing processes, is considered a priority.

The applicant is not aware of any baby eel substitute and fabrication method with the characteristics of the one here described.

### DESCRIPTION OF THE INVENTION

The invention which is the object of the present memory relates to a baby eel substitute and a fabrication method thereof, from among the food products based on fish derivatives known as surimi and the industrial fabrication processes, characterized in that it includes a number of new additives in its formulation which considerably improve the elasticity, gelling capacity or consistency and the aqueousness of the texture, as well as the product's stability during the freezing process and its wetting capacity; it also introduces a novel pH control system for the product which affects directly its organoleptic properties. The method is based on a conventional six-stage model, but it is characterized in that it incorporates an additional stage in which the water used in the product fabrication is previously treated to improve the properties of the final product and reduce the maintenance costs of the machinery employed and increase its durability.

The first stage of the fabrication process is the cutting and dicing of the fish used as the base of the product, carried out in conventional cutters from which the product passes to the second stage.

In this second stage the fish mass is homogenized by conventional means such as shaking or mixing and kneading and, although it can be clearly differentiated from the previous stage, in order to save machinery elements it can be more practical to integrate them in grinding, kneading and mixing containers which carry out the process known as "raikai". Both the first and second stage are carried out at a temperature next to 0°C or even somewhat lower, which is the state in which the raw material is generally acquired and in which the hygiene conditions required by the procedure are best fulfilled, although these can be increased by carrying out these stages in a vacuum.

The third stage is a stage prior to using the water, which is subjected to dechlorination and decalcification by conventional processes, so that the risk of genetic alterations is reduced by the dechlorination and, in addition the solubility of the other products in the fourth stage is improved, as well as improving the taste of the product which loses its characteristic taste of calcium carbonate, and lastly the calcification problem of the entire machinery is eliminated since after incorporation of the water treatment stage the treated water can be used not only in the fourth stage but also in any stage which requires water, such as in the seventh stage.

The fourth stage is the one which involves adding the additional ingredients to the fish mass at a temperature of 0°C. This invention requires at least eight necessary additives which may be complemented with another eight optional ones.

The first ones are water, treated by the process described before in a state just prior to freezing, with a proportion ranging between 17% and 30%, and animal or vegetable oil in a proportion between 1.5% and 3.5%, potassium or chlorine salt between 1% and 3%. This is followed by ovoalbumin, which is previously dehydrated thereby increasing greatly the product gelling capacity as compared to the ovoalbumiin used conventionally, in a proportion ranging between 3% and 5%. Another one is wheat flour with devitalized gluten, which retains moisture better than conventional vegetable flours and which is added in a proportion between 7% and 13%. A further novelty is lactic protein, which increases the protein level and thereby the nutritional value of the final product and which is added in a proportion between 1% and 2%. Flavor and aroma additives are always present, comprising between 1% and 3% of the total weight. Lastly there is a further novelty, sorbitol, which in a proportion of between 1% and 2% helps to prevent the possible cracking of the product during freezing.

These extra additives, except for carrageen, alginate and cephalopod ink, are completely novel in formulation of baby eel substitutes. Carrageen is added to a maximum of 1% to increase the gelling capacity of the suspension. Cellulose is also added to a maximum of 1%, providing a less aqueous texture and increasing the elasticity of the texture. It is also possible to add garrofin gum, xanthane gum or guar gum to a maximum of 0.5% to improve the consistency of the product and prevent the mass from crumbling. These have the advantage of acting in cold temperatures as sodium alginate, which can also be added to a maximum of 1% as a gelling agent in addition to carrageen. Apple pectin is a wetting agent which is added to a maximum of 0.5%. Also added are acids for pH correction, such as malate, lactate, acetate or tartaric acid in a maximum proportion of 0.005%. Lastly, cephalopod ink may be added as a natural colorant, up to 2% and in different proportions if the extruded product has masses with different colors.

In fifth place there is a second homogenization, with the same characteristics as that of the second stage for a correct distribution of the aforementioned additives in the initial fish mass.

In sixth place, there is the extrusion and cutting of the product to give it its final external appearance. In this case, a conventional layer extrusion and sequential cutting process is used, given the advantages this provides when incorporating transverse elements such as eye imitations, and the possibility of forming a specific outline for the product so that it can imitate the true eel as much as possible without losing material nor slowing down the production process.

In seventh and last place there is a heat treatment in which the already cut product is submerged for a maximum time of 5 minutes in water from the third stage heated to 90°C. After this there is a cold blast by briefly showering the extruded and cut product with cold water, also from the third stage, at a temperature between 1 and 5°C, so that the differential contraction of the interior and exterior of the product makes it adopt a rounded shape and a texture which is slightly different in the surface and interior, as is the case with the eels. This last stage does not imply an energy loss, only a prior cooling of the product before it is frozen or sold in the refrigerated products section; that is, its unavoidable cooling stage is separated into two steps.

All of this is performed without an increase in the price of the final product; in fact, a reduced cost is estimated on a medium and long term as the maintenance costs are reduced and the durability of the machinery employed in the fabrication process is increased due to the prior treatment of the water.

### PREFERRED EMBODIMENT OF THE INVENTION

In view of the above, the present invention relates to a baby eel substitute and method for fabrication thereof, from among food products based on fish known as "surimi" and their industrial fabrication methods, for which without representing the limits of the invention, the following is a specific example of an embodiment.

The procedure of the invention begins with the cutting and dicing of the product fish base, which represents 57% of the total weight, in cutter type containers at a temperature of 0°C. This is followed by a homogenization of the mass in grinding, kneading and mixing containers at the same temperature. In these containers are added to the fish mass the additional ingredients, which are: the previously dechlorinated and decalcified water in a proportion of 17%, still in liquid phase; vegetable oil in a proportion of 3%; sodium salt in a proportion of 2%; previously dehydrated ovoalbumin in a proportion of 4%; wheat flour with devitalized gluten in a proportion of 10.5%; lactic protein in a proportion of 1%: flavor and aroma additives in 1%; sorbitol in a proportion of 1%; carrageen in 0.5%; cellulose in 0.495%; garrofin gum in 0.5%; xanthane gum in 0.5%; sodium alginate in 0.5%; apple pectin in 0.5%; lactate in 0.005% and cephalopod ink in 0.5%. During and after the addition of the aforementioned ingredients a second homogenization with the same characteristics as the previous one takes place, before passing on to the product extrusion and cutting stage to give it its final external by a conventional layer extrusion and sequential cutting process.

At this point the cut product is submerged for 4 minutes in water treated as described above, and heated to 90°C. From the cooking vats the product passes on conveyor belts through a cold blast by spraying with this previously treated water at a temperature of 4°C, so that the differential contraction of the product at its surface and interior provides its final shape and texture.

## Claims

1. Fabrication method for a baby eel substitute, from among fabrication methods for jellified food products based on fish products generally known as "surimi", essentially **characterized in that** it includes a number of additives which affect its elasticity, consistency, gelling capacity and aqueousness of the texture, as well as the stability of the product during the freezing process and its wetting capacity, and **in that** it incorporates a control of the product pH and a prior treatment of the water, with the method involving seven stages in which the first is cutting and dicing the fish in conventional machinery, followed by the second stage in which the fish mass is conventionally homogenized by shaking or by mixing and kneading, with these preferably being integrated in a single industrial stage where both stages take place at 0°C or slightly under this temperature, while the third stage involves a dechlorination and decalcification of the water by conventional methods, which water is later added in the fourth stage to the fish mass together with the other additional ingredients at a temperature of 0°C, then in fifth place there is a second homogenization, with the same characteristics as that of the second stage, which leads to a sixth stage of extrusion and cutting of the product by a conventional layered extrusion and sequential cutting process, followed by the seventh and last stage in which a heat treatment is applied in which the product is submerged for a maximum of 5 minutes in water from the third stage heated to a temperature of 90°C, and then subjected to a cold blast by spraying cold water also from the third stage at a temperature between 1°C and 5°C.

2. Baby eel substitute food product obtainable by the process of claim 1, **characterized in that** the ingredients added in the fourth stage to the 57% fish mass are at least eight, which are: previously dechlorinated and decalcified water, in a phase just prior to freezing and in a proportion between 17% and 30%; vegetable or animal oil in a proportion between 1.5% and 3.5%; potassium or sodium salt in a proportion between 1% and 3%; previously dehydrated ovoalbumin in a proportion between 3% and 5%; wheat flour with devitalized gluten in a proportion between 7% and 13%; lactic protein in a proportion which may vary between 1% and 2%; flavors and aromas between 1% and 3% and sorbitol in a proportion between 1% and 2%.

3. Baby eel substitute food product as claimed in claim 2, **characterized in that** the necessary ingredients used in the fourth stage are complemented by an additional nine ingredients which are responsible for the final properties of the product, such as carrageen, added to a maximum of 1%, cellulose also to a maximum of 1%, garrofin gum and xanthane gum or guar gum to a maximum of 0.5%, sodium alginate added to a maximum of 1% as an additional gelling agent or as an alternative to carrageen, apple pectin to a maximum of 0.5%, pH correcting acids such as malate, lactate, acetate or tartaric acid to a maximum proportion of 0.005% and cephalopod ink as a natural colorant to a maximum of 2%, and possibly in different proportions if the extrusion has masses of different colors.

## Patentansprüche

1. Herstellungsmethode für einen Ersatz für Jungaale von Herstellungsmethoden für gelierte Lebensmittelprodukte, basierend auf Fischprodukten, die im Allgemeinen als "Surimi" bekannt sind, grundlegend dadurch gekennnzeichnet, dass sie eine Reihe von Zusätzen umfasst, die sich auf die Elastizität, Konsistenz, Gelierfähigkeit und Wässrigkeit der Textur auswirken, sowie auf die Stabilität des Produkts während des Gefrierprozesses und die Benetzungsfähigkeit und darin, dass sie eine Kontrolle des Produkt-pHs einschliesst und eine Vorbehandlung des Wassers, wobei die Methode sieben Phasen umfasst, von denen die erste das Schneiden und Würfeln des Fisches in herkömmlichen Maschinen ist, gefolgt von der zweiten, bei der die Fischmasse auf herkömmliche Weise durch Schütteln oder Mischen und Kneten homogenisiert wird, wobei diese vorzugsweise in einen einzigen industriellen Ablauf integriert sind, bei dem beide Phasen bei 0°C oder leicht unter dieser Temperatur stattfinden, während die dritte Phase eine Entchlorung und Entkalkung des Wassers durch herkömmliche Methoden umfasst und dieses Wasser später während der vierten Phase der Fischmasse zugeführt wird, zusammen mit anderen zusätzlichen Zutaten bei einer Temperatur von 0°C, dann an fünfter Stelle erfolgt eine zweite Homogenisierung mit den selben Eigenschaften wie in der zweiten Phase, was zu einer sechsten Phase der Extrusion und des Schneidens des Produkts führt durch ein herkömmliches schichtiges Extrusions- und sequentielles Schneidverfahren, gefolgt von einer siebten und letzten Phase, in der eine Wärmebehandlung angewendet wird, bei der das Produkt höchstens 5 Minuten lang in das Wasser aus der dritten Phase getaucht wird, auf 90°C erhitzt wird und dann durch das Aufsprühen von kaltem Wasser kaltgeblasen wird, das auch aus der dritten Phase stammt, bei einer Temperatur zwischen 1°C und 5°C.

2. Nahrungsmittel aus Jungaalersatz, erhältlich gemäss dem Verfahren des Anspruchs 1, **dadurch gekennzeichnet, dass** die in der vierten Phase zu 57% Fischmasse hinzugefügten Zutaten mindestens acht sind, die folgende sind: vorher entchlortes und entkalktes Wasser, in einer Phase genau vor dem Einfrieren und zu einem Anteil zwischen 17% und 30%; pflanzliches oder tierisches Öl zu einem Anteil zwischen 1,5% und 3,5%; Kalium- oder Natriumsalz zu einem Anteil zwischen 1% und 3%; vorher deshydriertes Ovoalbumin zu einem Anteil zwischen 3% und 5%; Weizenmehl mit devitalisiertem Gluten zu einem Anteil zwischen 7% und 13%; Milchprotein zu einem Anteil, der zwischen 1% und 2% schwanken kann; Geschmacks- und Aromastoffe zwischen 1% und 3% und Sorbitol zu einem Anteil zwischen 1% und 2%.

3. Nahrungsmittel aus Jungaalersatz gemäss Anspruch 2, **dadurch gekennzeichnet, dass** die notwendigen Zutaten, die in der vierten Phase verwendet werden, durch neun zusätzliche Zutaten ergänzt werden, die für die Endeigenschaften des Produkts verantwortlich sind, wie Carrageen, vom dem höchstens 1 % zugesetzt wird, Zellstoff, auch höchstens 1 %, Garrofingummi und Xanthangummi oder Guargummi bis höchstens 0,5%, Natriumalginat bis höchstens 1% als ein zusätzliches Geliermittel oder als Alternative zum Carrageen, Apfelpektin bis höchstens 0,5%, pH-korrigierende Säuren wie Malat,- Milch,- Azetat- oder Weinsäure bis zu einem Höchstanteil von 0,005% und Tintenfischtinte als ein natürliches Färbemittel bis höchstens 2% und möglicherweise in anderen Anteilen, wenn die Extrusion Massen mit verschiedenen Farben hat.

## Revendications

1. Procédé de fabrication de succédané de civelle, à partir des procédés de fabrication de produits alimentaires gélifiés à base de produits de poisson généralement connu comme «surimi », caractérisé essentiellement en ce qu'il inclut une série d'additifs qui affectent son élasticité, sa consistance, sa capacité de gélification et l'aquosité de la texture, ainsi que la stabilité du produit pendant le procédé de congélation et sa capacité humectante, et en ce qu'il incorpore un contrôle du PH du produit et un traitement préalable de l'eau, le procédé comprenant sept étapes dans lesquelles la première consiste à trancher et à couper en dés le poisson dans une machinerie conventionnelle, suivi par la deuxième étape dans laquelle la pâté de poisson est homogénéisée d'une façon conventionnelle en agitant ou en malaxant et en pétrissant, cela étant, de préférence intégré dans une étape industrielle unique où les deux étapes ont lieu à 0°C ou à une température légèrement inférieure à 0°C, la troisième étape comprend la déchloration et la décalcification de l'eau par des procédés conventionnels, ladite eau étant plus tard ajoutée lors de la quatrième étape à la pâte de poisson conjointement avec les autres ingrédients conventionnels à une température de 0°C, à la suite, lors de la cinquième étape, une seconde homogénéisation a lieu, avec les même caractéristiques que celle de la deuxième étape, celle-ci menant à une sixième étape d'extrusion et de coupe du produit par un procédé conventionnel d'extrusion en couche et de coupe séquentielle, suivi par la septième et dernière étape dans laquelle on applique un traitement thermique dans lequel le produit est immergé pendant un maximum de 5 minutes dans l'eau de la troisième étape réchauffée à une température de 90°C, et alors le produit est soumis à un vent froid en pulvérisant de l'eau froide également de la troisième étape à une température allant de 1°C à 5°C.

2. Produit alimentaire de succédané de civelle susceptible d'être obtenu par le procédé de la revendication 1, **caractérisé en ce que** les ingrédients ajoutés lors de la quatrième étape au 57% de la pâte de poisson sont au moins huit, ceux-ci étant : de l'eau préalablement déchlorée et décalcifiée, lors de phase précédant la congélation et dans une proportion allant de 17% à 30% ; de l'huile végétale ou animale dans une proportion allant de 1,5% à 3,5%, du sel de potassium ou de sodium dans une proportion allant de 1% à 3% ; de l'ovalbumine préalablement déshydratée dans une proportion allant de 3% à 5% de la farine de blé avec du gluten dévitalisé dans une proportion allant de 7% à 13% ; de la protéine lactique dans une proportion qui peut varier entre 1 % et 2% ; des parfums et des arômes allant de 1% à 3% et du sorbitol dans une proportion allant de 1% à 2%.

3. Produit alimentaire de succédané de civelle selon la revendication 2, **caractérisé en ce que** les ingrédients nécessaires utilisés lors de la quatrième étape sont complémentés par des neuvièmes ingrédients supplémentaires qui sont responsable des propriétés finales du produit, tels que le carragheen ajouté en une proportion maximale de 1%, la cellulose aussi en une proportion maximale de 1 %, la farine de graines de caroube et la gomme de xanthane ou gomme de guar en une proportion maximale de 0,5%, l'alginate de sodium ajouté en une proportion maximale de 1% en tant qu'ingrédient de gélification ou en tant qu'une alternative à la carragheen, la pectine de pomme en une proportion maximale de 0,5%, les acides correcteurs de pH tels que le malate, le lactate, l'acétate ou l'acide tartrique dans une proportion maximale de 0,005% et de l'encre de céphalopode en tant que colorant naturel dans une proportion maximale de 2% et possiblement dans des proportions différentes si l'extrusion a des pâtes de différentes couleurs.
